# EUROPEAN PATENT APPLICATION

(11) **EP 2 792 443 A1**
(43) Date of publication of application: **22.10.2014**
(21) Application number: 13163825.6
(22) Date of filing: 15.04.2013
(51) Int. Cl.: B23G 5/18

(54) **Thread mill**

(71) Applicant: Techno s.r.l., 41100 Modena (IT)
(72) Inventor: Fraggieri, Gabriele, 41122 Modena (IT)
(74) Representative: Molinari, Marinella

(57) **Abstract**

A helical thread mill has a cylindrical stem (2) and cutting portions (3) arranged at one end (4) of the cylindrical stem (2), at least one of the cutting portions (3) including a plurality of thread mill teeth (5), the cutting portions (3) being spaced apart by a plurality of helical flutes (6) developing around an axis (X) of the mill, in which at least one cutting portion (3a) is angularly distant from an adjacent cutting portion (3b) with a pitch (L) having a deviation (S1) comprised between the 5% and the 12% from a nominal pitch.

## Description

The invention relates to cutting tools for milling internal and external threads, i.e. threads inside holes and external threads on the perimeter of a work piece.

It is known that a thread mill enables to obtain a higher quality thread than a male tool on a work piece.

It is furthermore known that helical flutes, which wrap around the external surface of the body of a tool, enable a better chip evacuation than the straight flutes parallel to the axis of the tool.

As any moving organ also the rotation of the thread mill produces vibrations in the tool that sometimes may leave the piece with unacceptable surface finish.

An object of the invention is to provide a milling thread tool structure improved with respect to the milling thread tool structure of known type which enables high performance of the tool.

A further object of the invention is to obtain a thread mill in which harmonics and vibrations are reduced or even negligible.

A still further object is to produce a thread mill that enables to obtain a thread having a high surface finish with working speed higher than with thread mill of known type.

A further object is to obtain a thread mill having a mean lifetime higher that the thread mill of known type.

According to the invention, there is provided a helical thread mill having a cylindrical stem and cutting portions arranged at one end of said cylindrical stem, at least one of said cutting portion including a plurality of thread mill teeth, said cutting portions being spaced apart by a plurality of helical flutes that develop around an axis of said mill, **characterized in that** at least one cutting portion is angularly distanced from an adjacent cutting portion with a pitch having a deviation between the 5% and the 12% from a nominal pitch.

It has been experimentally verified that a helical thread mill according to the invention have optimal performance and enables to drastically reduce or even eliminate vibrations during machining.

The thread obtained with a thread mill according to the invention is more precise than a thread obtained on a piece with a thread mill of known type.

Furthermore, owing to the invention it is possible to enhance the advancing speed of the tool as well as the rotation speed of the tool, so reducing the machining performing time. Still owing to the invention, it has been found an increase in the mean lifetime of the helical thread mill.

The invention could be better understood and implemented with reference to the attached drawings that illustrate some exemplifying and non-limiting embodiments thereof, in which:
Figure 1 to 6 are views from above of helical thread mills having different number of cutting portions or different number of helical flutes;
Figure 1A, 1B, 2A, 2B, 3A, 3B, 4A, 4B, 5A, 5B, 6A, 6B are schematic views of angular pitches between the cutting portions of the mills of Figure 1 to 6 represented in a reference plane;
Figure 7 is a front interrupted view of a helical thread mill having five cutting portions and five helical flutes;
Figure 8 is a front view of a helical drilling-threading-chamfering mill having two cutting portions and two helical flutes.

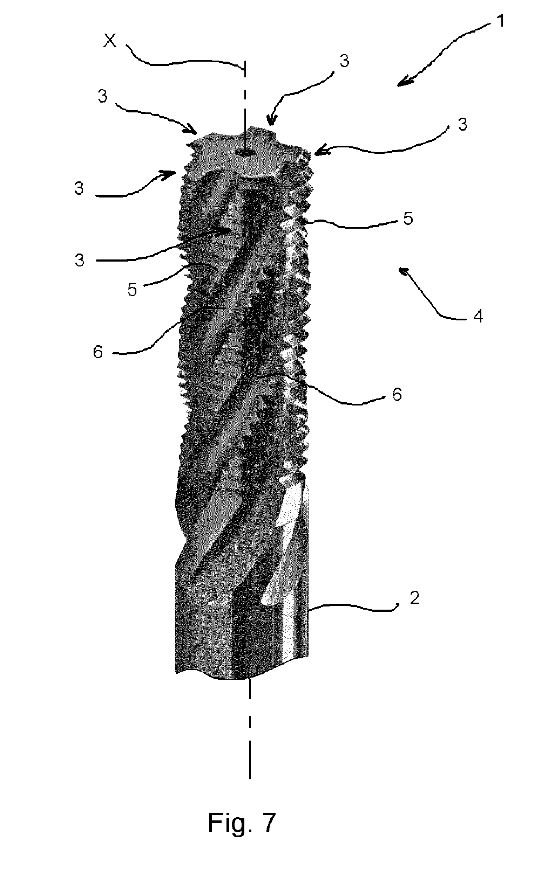

With reference to Figure 7, a helical thread mill 1 comprises a cylindrical stem 2 and cutting portions 3 arranged at one end 4 of said cylindrical stem 2, at least one of said cutting portions 3 including a plurality of thread mill teeth 5. The thread mill teeth are arranged in the cutting portions and have a structure consistent with the form of the thread that must be produced.

The cutting portions 3 are spaced apart by a plurality of helical flutes 6 that develop around an X axis of said helical thread mill 1.

At least a first cutting portion 3 is angularly spaced from a second cutting portion 3 adjacent or consecutive to the first cutting portion 3 with a pitch having a deviation between the 5% and the 12% from a nominal pitch. Therefore, at least one of the helical flutes 6 has a width differing from the nominal width, corresponding to angularly equidistant cutting portions.

The deviation from the nominal pitch may be positive, if the pitch is greater than the nominal pitch or negative, if the pitch is less than the nominal pitch. In a Cartesian plane, considering a reference axis positioned at the first cutting portion, the following description will refer to a deviation angle as formed between a nominal position of the second cutting portion with respect to the first cutting portion and the position of the second cutting portion disposed according to the invention. Of course, a positive deviation corresponds to a positive deviation angle and a negative deviation corresponds to a negative deviation angle.

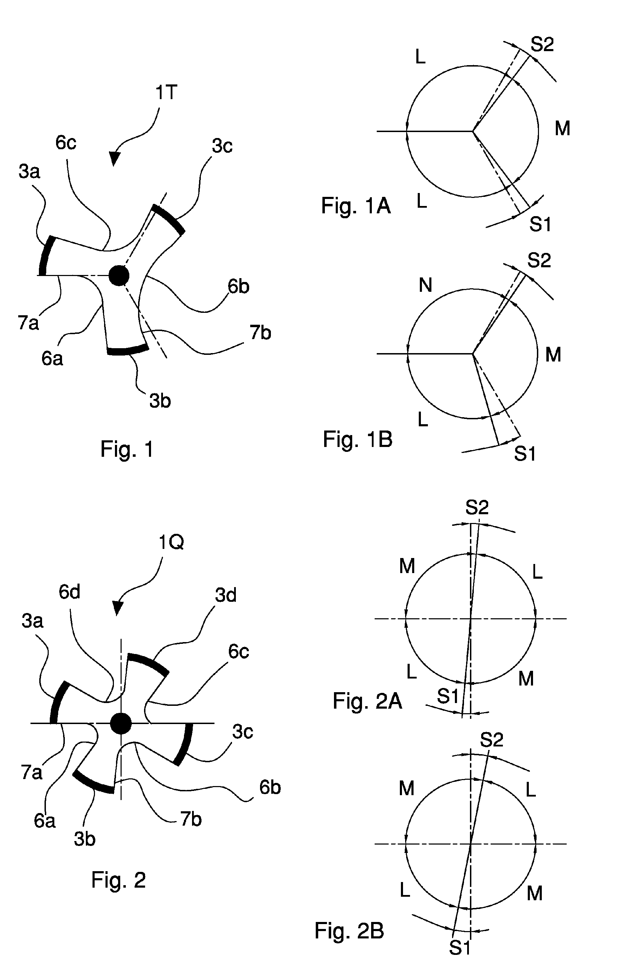

Figure 1 shows a helical thread mill 1T having three cutting portions 3a, 3b and 3c and three helical flutes 6a, 6b, 6c. The nominal pitch, corresponding to angularly equidistant cutting portions is in this case of 120° and is shown with long-short dashed line in Figures 1A e 1B. The pitch, indicated with references L, M and N, according to which the three cutting portions 3a, 3b e 3c are positioned is not constant, as Figures 1A e 1B show, in which the same reference corresponds to the same value of the pitch. The angular distance between a side 7a of a first cutting portion 3a and the corresponding side 7b of the second cutting portion 3b adjacent or consecutive to the first cutting portion 3a, defining the first pitch L of the helical thread mill 1T, diverges from the nominal pitch by an angular value S1 corresponding to a deviation from the nominal pitch comprised between 5% and 12%. In particular, in Figure 1A the deviation angle S1 is positive and corresponds to a deviation of about 6%. In Figure 1B the deviation angle S1 is negative and corresponds to a deviation of about 12%. For example, S1 on the helical thread mill 1T may be comprised between 7° and 14° or between -7° and -14° with respect to the nominal position at 120°.

Figure 2 shows a helical thread mill 1Q having four cutting portions 3a, 3b, 3c and 3d and four helical flutes 6a, 6b, 6c, 6d. The nominal pitch, corresponding to angularly equidistant cutting portions is in this case of 90° and is shown with long-short dashed line in Figures 2A e 2B. The pitch, indicated with references L, M, according to which the four cutting portions 3a, 3b, 3c, 3d are positioned is not constant, as Figures 2A and 2B show, in which the same reference corresponds to the same value of the pitch. The angular distance between a side 7a of a first cutting portion 3a and the corresponding side 7b of a second cutting portion 3b adjacent or consecutive to the first cutting portion 3a, defining a first pitch L of the helical thread mill 1Q, diverges from the nominal pitch for an angular value S1 corresponding to a deviation from the nominal pitch comprised between 5% and 12%. In particular, in Figure 2A the deviation angle S1 is negative and corresponds to a deviation of about 6%. In Figure 2B the deviation angle S1 is negative and corresponds to a deviation of about 12%. For example, S1 on the helical thread mill 1Q may be comprised between 5° and 11° or between -5° and -11° with respect to the nominal position at 90°.

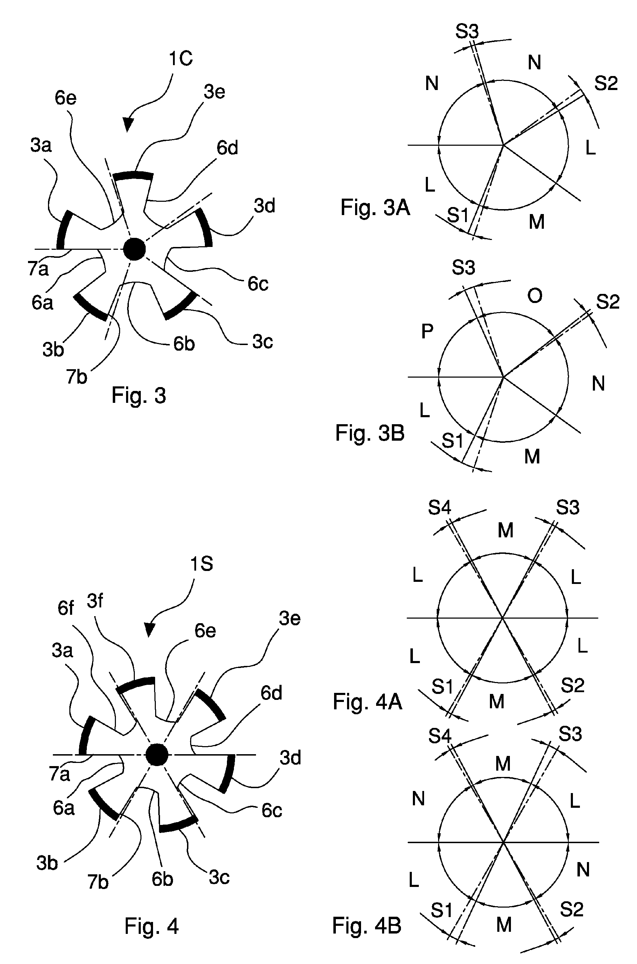

Figure 3 shows a helical thread mill 1C having five cutting portions 3a, 3b, 3c, 3d and 3e and five helical flutes 6a, 6b, 6c, 6d, 6e. The nominal pitch, corresponding to angularly equidistant cutting portions is in this case of 72° and is shown with long-short dashed line in Figures 3A and 3B. The pitch, indicated with references L, M, N, O, P according to which the five cutting portions 3a, 3b, 3c, 3d, 3e are positioned is not constant, as Figures 3A and 3B show, in which the same reference corresponds to the same value of the pitch. The angular distance between a side 7a of a first cutting portion 3a and the corresponding side 7b of a second cutting portion 3b adjacent or consecutive to the first cutting portion 3a, defining a first pitch L of the helical thread mill 1C, diverges from the nominal pitch by an angle S1 corresponding to a deviation from the nominal pitch comprised between 5% and 12%. In particular, in Figure 3A, the angle S1 is negative and corresponds to a negative deviation of about 6%. In Figure 3B, the angle S1 is negative and corresponds to a negative deviation of about 12%. For example, S1 on the helical thread mill 1C may be comprised between 4° and 8° or between -4° and -8° with respect to the nominal position at 72°.

Figure 4 shows a helical thread mill IS having six cutting portions 3a, 3b, 3c, 3d, 3e, 3f and six helical flutes 6a, 6b, 6c, 6d, 6e, 6f. The nominal pitch, corresponding to angularly equidistant cutting portions is in this case of 60° and is shown with long-short dashed line in Figures 4A and 4B. The pitch, indicated with references L, M, N, according to which the six cutting portions 3a, 3b, 3c, 3d, 3e, 3f are positioned is not constant. Also in this case, the same reference corresponds to the same value of the pitch. The angular distance between a side 7a of a first cutting portion 3a and the corresponding side 7b of a second cutting portion 3b adjacent or consecutive to the first cutting portion 3a, defining a first pitch L of the helical thread mill IS, diverges from the nominal pitch for an angle S1 corresponding to a deviation from the nominal pitch comprised between 5% and 12%. In particular, in Figure 4A the deviation angle S1 is positive and corresponds to a positive deviation of about 6%. In Figure 4B the deviation angle S1 is positive and corresponds to a positive deviation of about 12%. For example, S1 on the helical thread mill IS may be comprised between 2° and 5° or between -2° e -5° with respect to the nominal position at 60°.

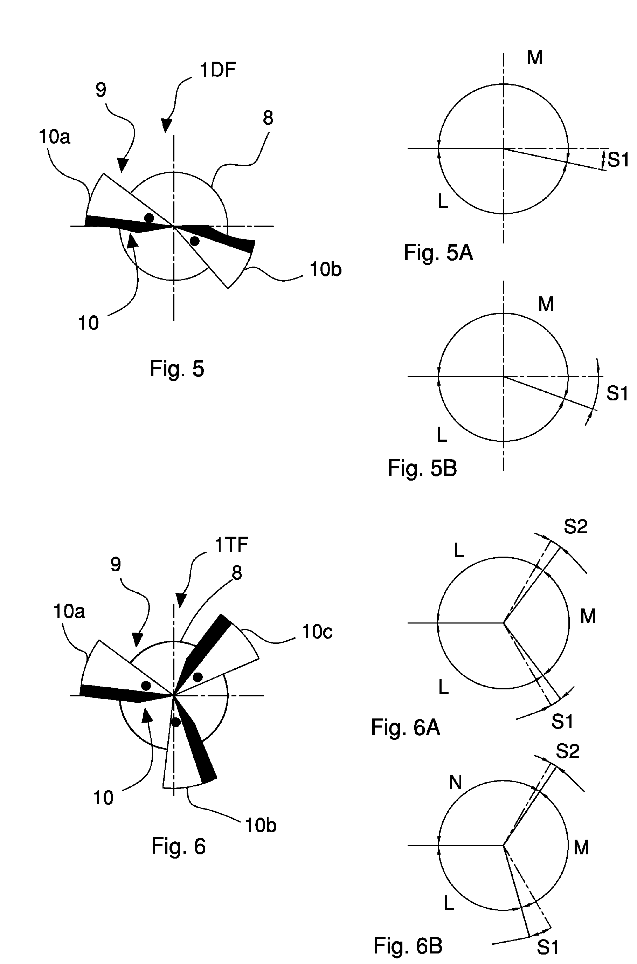

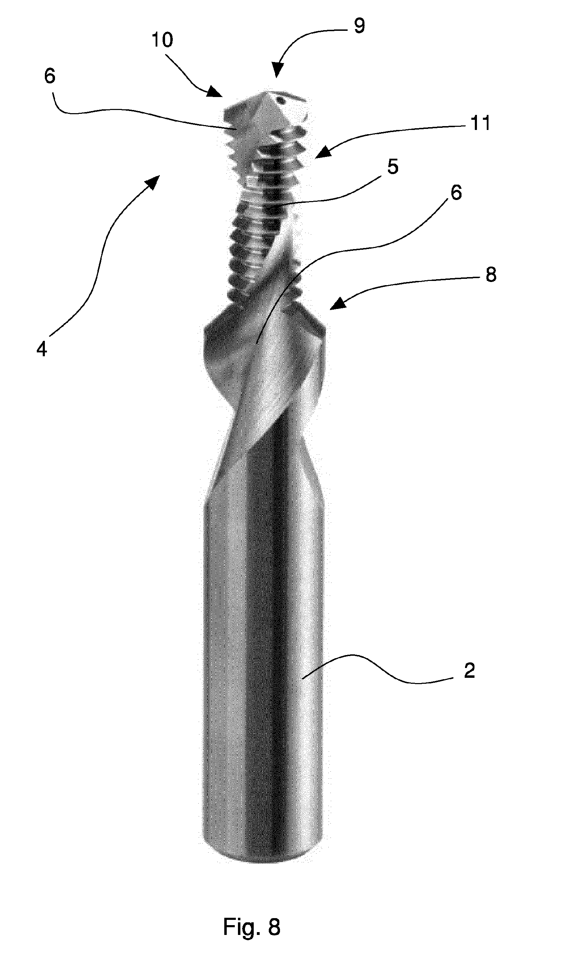

Figures 5, 6 and 8 shows embodiments of multi-function tools that comprise, moving along the cylindrical stem 2 in direction towards the end 4, a mill portion 8 for chamfering arranged downstream of the thread mill teeth 5 and that enables to create chamfers, a thread mill portion 11 provided with the thread mill teeth 5 shown in particular in Figure 8, a tip portion 9 provided with cutting edges 10 for drilling that enable the creation of holes. In these embodiments, the helical flutes 6 extend on the thread mill portion 11 and on the tip portion 9.

Also in these embodiments, at least a first cutting portion 10a is angularly distanced from a second cutting portion 10b adjacent or consecutive to the first cutting portion 10a with a pitch L having a deviation comprised between the 5% and the 12% from a nominal pitch.

Figure 5 shows a mill 1DF comprising two cutting edges 10a, 10b, in the tip portion 9. The nominal pitch, corresponding to cutting portions or cutting edges angularly equidistant, is in this case of 180° and is shown with long-short dashed line in Figures 5A e 5B. The pitch, indicated with the references L, M, according to which the two cutting edges 10a, 10b are positioned is not constant. In particular, in Figure 5A the deviation is negative and corresponds to about 6%. In Figure 5B the deviation is negative and corresponds to about 12%. For example, the deviation angle S1 of the mill 1DF may be comprised between 11° and 20° or between -11° and -20° with respect to the nominal position at 180°.

Figure 6 shows a mill 1TF comprising three cutting edges 10a, 10b, 10c in the tip portion 9. The nominal pitch, corresponding to cutting portion or cutting edges angularly equidistant is in this case of 120° and is shown with long-short dashed line in Figures 6A and 6B. The pitch, indicated with the references L, M, N according to which the three cutting edges 10a, 10b, 10c are positioned is not constant. In particular, in Figure 6A the pitch is positive and corresponds to about the 6%. In Figure 6B the pitch is negative and corresponds to about the 12%. For example, the deviation angle S1 on the mill 1TF may be comprised between 7° and 14° or between -7° and -14° with respect to the nominal position at 120°.

In the illustrated embodiments, the deviations S2, S3, S4 may be equal to the deviation S1 or different from S1 or may also be equal to 0. The position of the cutting portions 3c, 3d, 3e and 3f may also be different from the illustrated one. In other words, the sequence of the pitches may be different from the sequences of the illustrated pitches L, M, N, O, P. Owing to the presence of a cutting portion angularly distant from an adjacent cutting portion with a pitch having a deviation comprised between the 5% and the 12% from a nominal pitch, it is possible to obtain high performances of the helical thread mill.

In fact, it has been experimentally found that a helical thread mill according to the invention enables to work in total absence of vibrations and to obtain a very accurate thread. Furthermore, a helical thread mill made according to the invention may be used at a higher cutting speed and also at a higher advancing speed of the tool than the mills of known type, this resulting in a saving of time the thread cycle. In addition, the average life of the helical thread milling cutter according to the invention is increased compared to the known mills.

## Claims

1. Helical thread mill having a cylindrical stem (2) and cutting portions (3) arranged at one end (4) of said cylindrical stem (2), at least one of said cutting portions (3) including a plurality of thread mill teeth (5), said cutting portions (3) being spaced apart by a plurality of helical flutes (6) developing around an axis (X) of said mill, **characterized in that** at least one cutting portion (3a) is angularly distant from an adjacent cutting portion (3b) with a pitch (L) having a deviation (S1) comprised between the 5% and the 12% from a nominal pitch.

2. Helical thread mill (1) according to claim 1, wherein said deviation (S1) may be positive if the pitch (L) is greater than the nominal pitch or negative if the pitch (L) is less than the nominal pitch, said nominal pitch corresponding to the pitch of cutting portion angularly equidistant.

3. Helical thread mill (1) according to claim 1 or 2, wherein said cutting portion (3) may an odd number or even number.

4. Helical thread mill (1) according to any one of the preceding claim, and further comprising a tip portion (9) provided with cutting edges for drilling (10a, 10b; 10c) spaced apart by said helical flutes (6).

5. Helical thread mill (1) according to claim 4, and further comprising a mill portion for chamfering (8) arranged downstream of said plurality of thread mill teeth (5).
